# EUROPÄISCHE PATENTANMELDUNG

(11) **EP 0 532 826 A2**
(43) Veröffentlichungstag der Anmeldung: **24.03.1993**
(21) Anmeldenummer: 92104739.5
(22) Anmeldetag: 19.03.1992
(51) Int. Cl.: H04M 1/72, H04M 11/04

(54) **Notrufeinrichtung**

(30) Priorität: 14.09.1991 DE 4130647
(71) Anmelder: ROBERT BOSCH GMBH, 70442 Stuttgart (DE)
(72) Erfinder: Krüger, Hans-Eckhard, Dr. Dipl.-Ing., W-3200 Hildesheim (DE); Koch, Harry, Dipl.-Ing., W-3006 Burgwedel 3 (DE); Hartmann, Jürgen, Dipl.-Ing., W-3340 Wolfenbüttel (DE)

(57) **Zusammenfassung**

2.1 Bekannte Notrufeinrichtungen senden nach Betätigung eines Notrufschalters (S) automatisch ein Rufkodesignal an eine aus Notrufempfänger und Telefon-Wähleinrichtung bestehende Einrichtung aus. Eine derartige Einrichtung setzt eine spezielle Entwicklung und Fertigung voraus.

2.2 Um den Aufwand für die Bereitstellung derartiger Einrichtungen zu vereinfachen, wird eine mit dem Telefonnetz (F) verbundene Basisstation (B1) eines schnurlosen Telefons (C1) verwendet.

3. Die Figur zeigt ein Blockschaltbild einer erfindungsgemäßen Notrufeinrichtung.

## Beschreibung

Die Erfindung geht von einer Notrufeinrichtung nach dem Oberbegriff des Anspruchs 1 aus.

Es ist eine derartige Notrufeinrichtung bekannt (Funkschau, 1990, Heft 12, Seiten 56 bis 59), bei der eine Kombination aus einem Notrufempfänger und einer von diesem gesteuerten Telefon-Wähleinrichtung zum Einsatz kommt, die nur für diesen speziellen Zweck entwickelt und gefertigt wird.

Der Erfindung liegt die Aufgabe zugrunde, eine Notrufeinrichtung nach dem Oberbegriff des Anspruchs 1 derart weiterzubilden, daß sich der Aufwand für die Bereitstellung des Notrufempfängers und der Telefon-Wähleinrichtung vereinfacht.

Diese Aufgabe wird durch eine Notrufeinrichtung mit den kennzeichnenden Merkmalen des Anspruchs 1 gelöst. Schnurlose Telefone werden heute bereits in großen Stückzahlen gefertigt, und es bereitet keine technischen Schwierigkeiten, die Basisstation eines schnurlosen Telefons an die Erfordernisse des Betriebes einer Notrufeinrichtung anzupassen, das heißt zum Beispiel einen ohnehin nur für Steuerzwecke vorgesehenen Sonderkanal der Basisstation für die Übertragung des Rufkodesignals auszunutzen und den bei schnurlosen Telefonen üblichen Kurzwahlspeicher entsprechend zu programmieren.

Um im Notfall auch dann Hilfe zu bekommen, wenn der zu verständigende Telefonteilnehmer gerade nicht erreichbar ist, werden in Weiterbildung der Erfindung die im kennzeichnenden Teil des Anspruchs 2 aufgeführten Maßnahmen ergriffen.

Ausführungsbeispiele der Erfindung sind in der Zeichnung anhand mehrerer Figuren dargestellt und werden im folgenden näher erläutert. Es zeigen
- Fig. 1: ein Blockschaltbild einer erfindungsgemäßen Notrufeinrichtung,
- Fig. 2: einen schematischen Aufbau eines Rufkodesignals,
- Fig. 3: ein Blockschaltbild eines Notrufsenders und
- Fig. 4: ein Blockschaltbild eines Empfangsteils einer Basisstation eines schnurlosen Telefons.

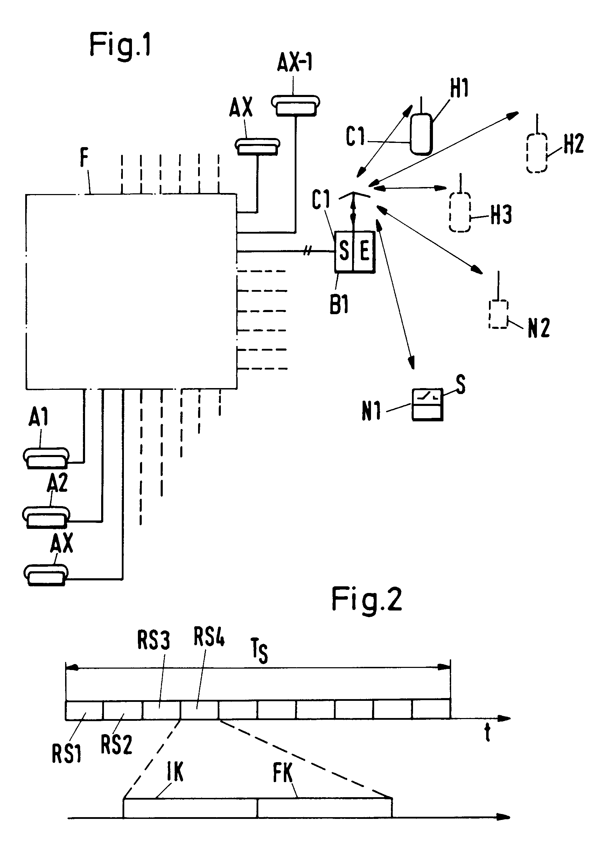

In Fig. 1 symbolisiert F ein Telefonnetz, das ist zum Beispiel ein öffentliches Telefonnetz, zu dem eine Vielzahl von Telefonen A1, A2 ... AX und schnurlose Telefone gehören, von denen in Fig. 1 nur ein schnurloses Telefon C1 gezeigt ist. Jedes schnurlose Telefon, zum Beispiel C1, besteht im wesentlichen aus einer Basisstation, zum Beispiel B1, mit Sender S und Empfänger E und aus einem Handapparat, zum Beispiel H1. Zu einer Basisstation, könnnen noch weitere Handapparate gehören, die in Fig. 1 mit H2 und H3 bezeichnet sind. Einem schnurlosen Telefon, zum Beispiel C1, sind ein oder mehrere Notrufgeräte N1, N2 zugeordnet, das sind Notrufsender oder kombinierte Notrufsender und -empfänger.

Die Wirkungsweise der vorstehend beschriebenen Notrufeinrichtung mit einem Notrufsender ist folgende.

Befindet sich der Benutzer eines vorzugsweise in der Hand oder am Körper zu tragenden Notrufsenders, zum Beispiel N1, in einer Notsituation, so betätigt er den Notrufschalter S seines Notrufsenders. Der Notrufsender arbeitet auf einem bestimmten Funkkanal, beispielsweise auf dem sogenannten Sonderkanal, der bei schnurlosen Telefonen für Steuerzwecke vorgesehen ist und für dessen Belegung keine Belegungsprüfung erforderlich ist. Der Notrufsender sendet nach Betätigung des Notrufschalters S für eine vorgegebene Sendezeit T_{S} (Fig. 2) eine Folge von Rufkodesignalen RS1, RS2 ... aus, das einen den Notrufsender, zum Beispiel N1, und die Basisstation, zum Beispiel B1, kennzeichnenden Identitätskode IK und einen Fernwirkkode FK umfaßt (vgl. Fig. 2).

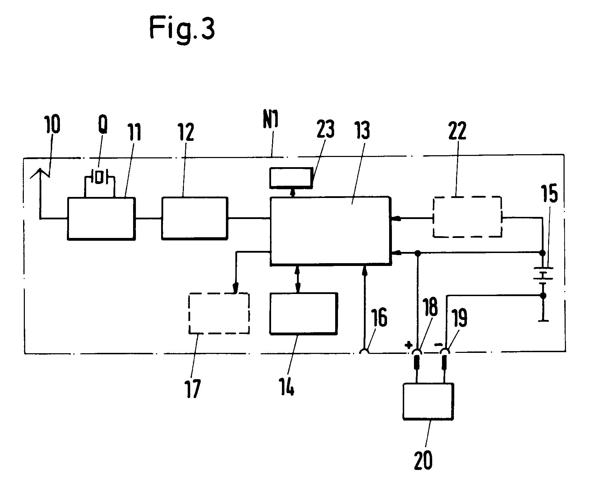

Ein Beispiel für den Aufbau eines Notrufsenders, zum Beispiel N1, ist in Fig. 3 durch ein Blockschaltbild dargestellt. Der Notrufsender N1 enthält als wesentliche Bestandteile eine Sendeantenne 10, einen damit verbundenen Sendeteil 11, einen Datenmodulator 12, eine Steuerungsvorrichtung 13, einen mit dieser verbundenen elektronischen Speicher 14 und eine Gleichspannungsquelle 15, das ist vorzugsweise ein Akkumulator.

Die Steuerungsvorrichtung 13 steht mit einem ersten Anschluß 16 zum Zuführen von Programmiersignalen und einem zweiten und dritten Anschluß 18, 19 zum Zuführen einer Ladespannung für das Aufladen bzw. Nachladen des Akkumulators 15 mittels eines Ladegerätes 20 sowie gegebenenfalls mit einer Bedienvorrichtung 17, das ist zum Beispiel eine Drucktaste, in Verbindung. Das Programmieren der Steuerungsvorrichtung 13 mit dem Rufkode des Rufkodesignals RS (Fig. 2) erfolgt einmalig vor oder bei der Übergabe des Notrufsenders N1 an eine gefährdete Person.

An die Stelle der Basisstation B1 kann gegebenenfalls eine Kombination aus Basisstation und einem mit dem Telefonnetz F verbundenen Telefonapparat, dessen Handapparat über ein Kabel mit dem Apparat verbunden ist, treten. Dabei weisen vorteilhafterweise Telefonapparat und Basisstation ein gemeinsames Gehäuse auf. Das Gehäuse enthält vorzugsweise eine Aufnahme für einen Handapparat H1.

In Fig. 3 ist als Option für den Notrufsender N1 eine Vorrichtung zur Ladezustandskontrolle 22 gezeigt, mit der die augenblicklich verfügbare Akkumulatorkapazität überwacht und über die Steuerungsvorrichtung 13 und ein zum Beispiel optisches Anzeigeorgan 23 eine Kapazitätsanzeige erzeugt wird.

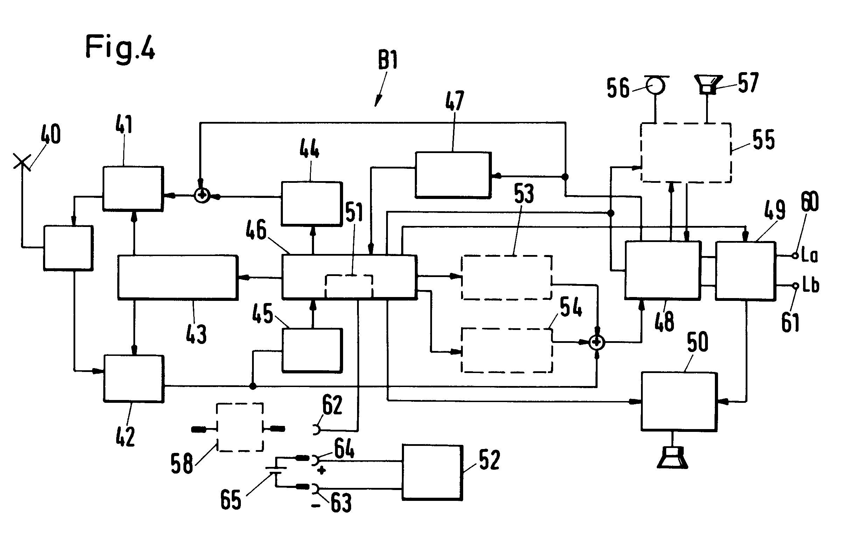

Ein Beispiel für den zugehörigen Empfänger E geht aus dem eine Basisstation B1 darstellenden Blockschaltbild in Fig. 4 hervor, die als wesentliche Bestandteile eine Sende- und Empfangsantenne 40, ein Sendeteil 41, ein Empfangsteil 42, eine Vorrichtung zur Frequenzaufbereitung 43, einen Datenmodulator 44 und einen Datendemodulator 45, eine Steuerlogik 46 mit einem Speicher 51, eine Schaltung zur Hörtonauswertung 47, eine Gabelschaltung 48, eine Impulswahleinrichtung 49 und eine Vorrichtung zur Rufwiedergabe 50 sowie ein Ladegerät 52 umfaßt.

Als Optionen für den Empfänger E können ein Tongenerator 53, ein digitaler Sprachspeicher 54 und eine Freisprecheinrichtung 55 mit einem Mikrofon 56 und einem Lautsprecher 57 vorgesehen sein.

Die Impulswahleinrichtung 49 hat zwei Ausgänge 60 und 61 auf, die mit dem Telefonnetz F (Fig. 1) in Verbindung stehen. Die Steuerlogik 46 weist einen Anschluß 62 zum Zuführen von Programmiersignalen und das Ladegerät 52 zwei Anschlüsse 63, 64 auf, an die ein Akkumulator 65 angeschlossen werden kann, der zur Spannungsversorgung des Empfangsteils E der Basisstation B1 dient.

Die Wirkungsweise der mit dem Notrufsender N1 korrespondierenden Basisstation B1 (Fig. 4) des schnurlosen Telefons C1 ist folgende.

Der Empfänger E sucht fortlaufend alle Sprechkanäle des schnurlosen Telefonsystems sowie den Sonderkanal ab. Die maximale Suchdauer ist hierbei kleiner als die Sendezeit T_{S} (Fig. 2) des Notrufsenders N1.

Hat der Empfänger E das Rufkodesignal RS des Notrufsenders N1 richtig empfangen, dekodiert, auf Übereinstimmung des Identitätskodes IK mit dem eigenen Kode überprüft und den Fernwirkkode FK erkannt, wird in dem Empfänger E automatisch ein Wählvorgang eingeleitet, das heißt eine mit dem Benutzer des Notrufsenders N1 vorher vereinbarte, in dem Speicher 51 (Fig. 4) des Empfängers gespeicherte Rufnummer eines zu verständigenden Fernsprechteilnehmers, zum Beispiel des Telefons A1, gewählt. In dem Speicher 51 können aber auch noch weitere Rufnummern von anderen zu verständigenden Fernsprechteilnehmern gespeichert sein, die bei belegter Leitung oder besetztem Teilnehmeranschluß oder bei Nichtannahme durch den Teilnehmer nach einer einstellbaren Zahl von Rufen nacheinander gerufen werden, bis eine Telefonverbindung zustandekommt. Sollte dies nicht der Fall sein, so kann das Rufen der zu verständigenden Personen wiederholt werden.

Der Verbindungsaufbau kann vorteilhafterweise über die in der Basisstation B1 gegebenenfalls vorhandene Freisprechvorrichtung 55, deren Funktion dem Fachmann geläufig ist, mitgehört werden. Das Zustandekommen der Verbindung wird entweder
- durch besonderen Tonruf oder
- durch Sprachansage über den Lautsprecher 57 der Freisprecheinrichtung 55
mitgeteilt.

Der gerufene Telefonteilnehmer, zum Beispiel A1 (Fig. 1), erhält eine Meldung über den anstehenden Notruf entweder
- durch eine besondere, vorher vereinbarte Tonfolge oder
- durch eine automatische Sprachdurchsage aus dem digitalen Sprachspeicher 54 der Basisstation B1 oder
- durch eine Freisprecheinrichtung direkt von der notrufenden Person.

Die zuletzt genannte Alternative setzt voraus, daß die Basisstation B1 (Fig. 4) zusätzlich eine Freisprecheinrichtung aufweist.

Der angerufene Telefonteilnehmer mit dem Telefon A1 kann daraufhin entsprechende Schritte zur Hilfeleistung einleiten. Hat der notrufende Teilnehmer ein als kombiniertes Sende- und Empfangsgerät ausgebildetes Notrufgerät, so kann der angerufene Telefonteilnehmer auch mit dem Notrufenden sprechen.

Im folgenden werden vorteilhafte Weiterbildungen der Notrufeinrichtung erläutert.
- Um die Betriebsbereitschaft des Notrufgerätes N1 in der Basisstation B1 anzuzeigen, wird zum Beispiel durch eine besondere Bedienung des Notrufsenders, zum Beispiel durch Betätigen einer Taste, oder durch eine automatische Zeitsteuerung eine akustische oder optische Bereitschaftsanzeige in der Basisstation B1 erzeugt, ohne daß dazu die Basisstation eine Verbindung zu einem Telefon, zum Beispiel A1, herstellt.
- Bei dem Notrufsender, zum Beispiel N1, kann an Stelle des bei schnurlosen Telefonen üblichen PLL-Synthesizers ein Quarzoszillator (vgl. Quarz Q in Fig. 3) zur Erzeugung des HF-Signals verwendet werden. Damit ist der Vorteil verbunden, daß der Notrufsender mit geringer Stromaufnahme auskommt und kostengünstiger herzustellen ist.
- Bei Notrufauslösung kann auch an Stelle einer Fernsprechverbindung eine Funkverbindung zu einem der Handapparate H1, H2, H3 des schnurlosen Telefons C1 aufgebaut werden, wobei sowohl eine akustische Signalisierung mit Tonfolgen oder Ansagetext als auch ein Freisprechen über die Basisstation B1 möglich ist. Diese Betriebsart entspricht einem Intercom-Betrieb.
- Ein Test des Akkumulators eines Notrufgerätes N1 kann folgendermaßen realisiert werden. Bei jedem Testanruf des Notrufgerätes N1 wird automatisch oder durch manuelle Steuerung im Digitaltelegramm (Fig. 2) eine Information über den mit der Ladezustandskontrolle 22 (Fig. 3) gemessenen Ladezustand des Akkumulators 15 mitausgesendet. Dadurch wird in der Basisstation B1 rechtzeitig vor einer vollständigen Entladung des Akkumulators ein akustisches oder optisches Signal ausgelöst.
- Der Benutzer eines Notrufgerätes, zum Beispiel N1, kann durch eine Bedienungsperson zum manuellen Auslösen einer Testfunktion aufgefordert werden, zum Beispiel durch Sprachansage über die Freisprecheinrichtung 55 (Fig. 4) oder durch eine sich von anderen Tonruffolgen deutlich unterscheidbare Tonruffolge eines Anruforgans.

Die Initialisierung eines Notrufgerätes N1 in einer vorhandenen schnurlosen Telefonanlage geschieht vorzugsweise folgendermaßen.
- Das Notrufgerät, zum Beispiel N1, wird auf das Gehäuse der zugeordneten Basisstation, zum Beispiel B1, aufgelegt, wobei ein zusammen mit dem Notrufgerät gelieferter Adapter 58 dafür sorgt, daß eine Verbindung zwischen dem Speicher 51 der Basisstation und der Steuerungsvorrichtung 13 des Notrufgerätes N1 zum Beispiel über die Anschlüsse 62 und 16 erfolgt.
- Alternativ dazu kann die Initialisierungsfunktion auch durch eine PIN-(Personal Identification Number)-geschützte Bedienroutine an einem Handapparat H1 bis H3 ausgelöst werden. Dabei wird der Identitätskode der Basisstation, zum Beispiel B1, in das Notrufgerät, zum Beispiel N1, übertragen. Damit ist der Vorteil einer einfachen Lagerhaltung verbunden, da keine fabrikmäßige Programmierung des Notrufgerätes erforderlich ist. Das Einfügen eines Notrufgerätes in bestehende schnurlose Telefonanlagen ist somit ohne zusätzliches Service-Personal möglich.
- Ein Betrieb von mehreren Notrufgeräten N1, N2 an einer Basisstation B1, zum Beispiel für Altenwohnanlagen oder Pflegeheime, ist ebenfalls vorteilhaft. In diesem Fall erfolgt die Initialisierung wie vorstehend beschrieben, wobei für das jeweils zu programmierende Notrufgerät eine Gerätenummer in die Bedienfolge an einem Handapparat, zum Beispiel H1, eingegeben wird.
- Bei einer Zuordnung von verschiedenen Notrufnummern zu den einzelnen Notrufgeräten N1, N2 wird zum Beispiel für das Notrufgerät N1 ein Kurzwahlspeicher 1 usw. verwendet.
- Die Speisung der Basisstation, zum Beispiel B1, erfolgt vorzugsweise durch einen gepufferten Akkumulator 65, so daß die Notruffunktion auch bei einem Netzspannungsausfall gewährleistet ist.
- Es ist auch vorteilhaft, den Reserve-Akkumulator eines schnurlosen Telefons, zum Beispiel C1, in der Ladeschaltung der Basisstation B1 als Puffer-Akkumulator zu verwenden.

## Patentansprüche

1. Notrufeinrichtung mit einem tragbaren Notrufgerät, das nach Betätigung seines Notrufschalters automatisch ein Rufkodesignal an einen dem Notrufgerät zugeordneten Notrufempfänger aussendet, der bei als richtig erkanntem Rufkode die Aussendung eines Wählsignals zum Anrufen eines über das Vorliegen des Notfalls zu verständigenden Telefonteilnehmers auslöst, **dadurch gekennzeichnet,** daß der Notrufempfänger eine mit dem Telefonnetz (F) verbundene Basisstation (B1) eines schnurlosen Telefons (C1) ist, mit der das Notrufgerät (N1) durch Aussenden eines Rufkodesignals (RS), das einen die Basisstation (B1) und das Notrufgerät (N1) kennzeichnenden Identitätskode (IK) und einen das Vorliegen eines Notfalls kennzeichnenden Fernwirkkode (FK) umfaßt, über einen festgelegten Sonderkanal des schnurlosen Telefonsystems in Verbindung tritt und daß die Basisstation (B1) nach dem Empfangen und Auswerten des Rufkodesignals automatisch eine in einem elektronischen Speicher (51) einer Steuerlogik (46) des Empfängers (E) abgelegte Rufnummer des zu verständigenden Telefonteilnehmers wählt.

2. Notrufeinrichtung nach Anspruch 1, dadurch gekennzeichnet, daß in dem elektronischen Speicher (51) der Steuerlogik (46) des Empfängers (E) die Rufnummern mehrerer über das Vorliegen eines Notfalls zu verständigender Telefonteilnehmer abgelegt sind und daß die Basisstation (B1) nach dem richtigen Auswerten des Rufkodesignals (RS) die Rufnummern der Telefonteilnehmer in einer vorgegebenen Reihenfolge wählt, bis eine Verbindung zustandekommt, und, falls keine Verbindung zustandekommt, den Wählvorgang wiederholt.

3. Notrufeinrichtung nach Anspruch 1 oder 2, dadurch gekennzeichnet, daß das Notrufgerät (N1) ein Notrufsender oder kombinierter Notrufsender und -empfänger ist und daß das Notrufgerät auf einen festen Funkkanal eingestellt und auf die Kennung der Basisstation (B1) programmiert ist.

4. Notrufeinrichtung nach Anspruch 1, 2 oder 3, dadurch gekennzeichnet, daß das Notrufgerät (N1) eine Steuerungsvorrichtung (13) aufweist, die während einer Notrufaussendung veranlaßt, daß die Kennung des Notrufgerätes laufend wiederholt wird.

5. Notrufeinrichtung nach einem der Ansprüche 1 bis 4, dadurch gekennzeichnet, daß die Basisstation (B1) eine Freisprecheinrichtung (55) mit einem Mikrofon (56) und einem Lautsprecher (57) enthält.

6. Notrufeinrichtung rach einem der Ansprüche 1 bis 5, dadurch gekennzeichnet, daß das Notrufgerät (N1) Bedienungsmittel (17) aufweist, nach deren Betätigung das Notrufgerät (N1) ein Rufkodesignal (RS) mit einer Testinformation an die Basisstation (B1) aussendet.

7. Notrufeinrichtung nach Anspruch 6, dadurch gekennzeichnet, daß die Testinformation eine die Betriebsbereitschaft des Notrufgerätes (N1) symbolisierende Information ist.

8. Notrufeinrichtung nach einem der Ansprüche 1 bis 7, dadurch gekennzeichnet, daß an die Stelle einer Basisstation (B1) eine Kombination aus einem Telefonapparat mit über ein Kabel angeschlossenem Handapparat und einem Basisteil eines schnurlosen Telefons tritt.

9. Notrufeinrichtung nach Anspruch 8, dadurch gekennzeichnet, daß die Basisstation (B1) eine Auflage für einen Handapparat (H1) des schnurlosen Telefons aufweist.
